(19) Europäisches Patentamt

European Patent Office

Office européen des brevets

(11) Veröffentlichungsnummer: **0 301 553**
**B1**

(12) **EUROPÄISCHE PATENTSCHRIFT**

(45) Veröffentlichungstag der Patentschrift: **16.01.91**

(51) Int. Cl.⁵: **B 60 B 19/10, F 16 D 65/847**

(21) Anmeldenummer: **88112261.8**

(22) Anmeldetag: **28.07.88**

(54) **Rad für Kraftfahrzeuge, insbesondere Personenkraftwagen.**

(30) Priorität: **28.07.87 DE 3724925**

(43) Veröffentlichungstag der Anmeldung:
**01.02.89 Patentblatt 89/05**

(45) Bekanntmachung des Hinweises auf die
Patenterteilung:
**16.01.91 Patentblatt 91/03**

(84) Benannte Vertragsstaaten:
**DE ES FR GB IT SE**

(56) Entgegenhaltungen:
**WO-A-85/05661**
**DE-A-2 103 937**
**DE-A-3 321 750**
**US-A-3 805 935**

(73) Patentinhaber: **Bayerische Motoren Werke**
**Aktiengesellschaft**
**Patentabteilung AJ-30 Postfach 40 02 40**
**Petuelring 130**
**D-8000 München 40 (DE)**

(72) Erfinder: **Evers, Bernd, Dr.-Ing.**
**Dianastrasse 26**
**D-8013 Haar (DE)**
Erfinder: **Schlenz, Dieter, Dr.-Ing.**
**Dorfstrasse 29a**
**D-8081 Kottgeisering (DE)**
Erfinder: **Ammerschläger, Thomas, Dipl.-Ing.**
**Lebzelter Strasse 4b**
**D-8000 München 82 (DE)**
Erfinder: **Janssen, Lutz J., Dipl.-Ing.**
**Friedastrasse 7e**
**D-8000 München 71 (DE)**

(74) Vertreter: **Draeger, Karlfried et al**
**Bayerische Motoren Werke Aktiengesellschaft**
**Postfach 40 02 40 Petuelring 130 - AJ 36**
**D-8000 München 40 (DE)**

**Beschreibung**

Die Erfindung betrifft ein Rad für Kraftfahrzeuge, insbesondere Personenkraftwagen, nach dem Oberbegriff des Patentanspruchs 1.

Bei einem aus der US-A-3 059 730 bekannten Rad dieser Art ist an der Außenseite der Radscheibe ein als Radblende ausgebildetes Einsatzteil befestigt, an dem die beiden Schaufelkränze vorgesehen sind. Die Schaufeln beider Schaufelkränze sind eben ausgebildet und radial und in Achsrichtung ausgerichtet. Bei rotierendem Rad ergibt sich eine im wesentlichen in radialer Richtung verlaufende Luftströmung von den Lufteintrittsöffnungen an der Außenseite des von dem Rad umschlossenen Bremsengehäuses entlang zu den Luftaustrittsöffnungen, durch welche auch die von der Radinnenseite über den Außenbereich der Bremse hinweg strömende Kühlluft zu der Radaußenseite strömen kann.

Der Erfindung liegt die Aufgabe zugrunde, ein Rad der eingangs genannten Art zu schaffen, das eine gute Luftführung zu der bei an einem Fahrzeug angebrachtem Rad neben der Radscheibe angeordneten Bremse und von dieser weg und damit eine gute Bremsenkühlung und außerdem gleichzeitig eine gute Radkühlung ermöglicht.

Die Lösung dieser Aufgabe ist in dem kennzeichnenden Teil des Patentanspruchs 1 angegeben. Durch sie wird erreicht, daß Luft in großer Menge an der Bremse entlang geführt werden kann, insbesondere im wesentlichen axiale Luftströmungen mit gezielter Luftführung und eine intensive Belüftung des Rades erzielt werden können.

Es ist zwar ein Fahrzeugrad bekannt, bei dem die Felge und die Radscheibe über als dünne Schaufeln ausgebildete Verbindungsrippen zum Erzeugen einer von der Radinnenseite zu der Radaußenseite gerichteten Luftströmung mit Abstand voneinander miteinander verbunden sind und die Verbindungsrippen zu der Radachse schräg in einem Ringkanal angeordnet sind (DE-C-28 53 606). Bei diesem bekannten Rad erstreckt sich jedoch der Ringkanal, durch den zur Bremsenkühlung beim Fahren Luft, die an der Radinnenseite in den von der Felge umschlossenen Raum strömt, zu der Radaußenseite geleitet wird und der einen etwa konischen Verlauf aufweist, über den gesamten Bereich zwischen der Nabe und der Felge.

Ausgestaltungen der Erfindung, die insbesondere bei Hochgeschwindigkeitsfahrzeugen, vorzugsweise Wettbewerbsfahrzeugen, vorteilhaft einzusetzen ist, sind in den Unteransprüchen gekennzeichnet.

Durch die Ausbildung nach Anspruch 2 ist eine besonders gut gezielte Luftführung erreichbar. Bei der Ausbildung nach Anspruch 10 braucht nur das Einsatzteil drehrichtungsabhängig ausgebildet zu sein, während das Rad im übrigen für beide Fahrzeugseiten gleich ausgebildet sein kann, wodurch sich z.B. Herstellungs- und Lagerungsvorteile ergeben.

In der Zeichnung sind Ausführungsbeispiele der Erfindung schematisch dargestellt, und zwar zeigt

Fig. 1 einen Ausschnitt eines Rades in Schrägansicht,

Fig. 2 einen halbaxialen Schnitt durch das Rad nach Fig. 1 und

Fig. 3 einen Axialschnitt durch den Teil eines anderen Rades.

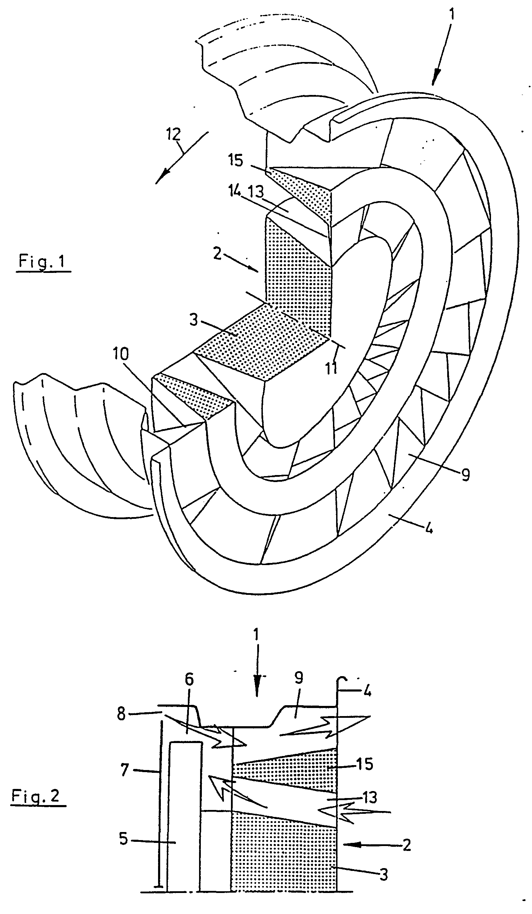

Nach Fig. 1 und Fig. 2 weist ein Rad 1, das bei Hochgeschwindigkeitspersonenkraftwagen, insbesondere Wettbewerbsfahrzeugen, eingesetzt werden kann, eine Radscheibe 2 mit einer Nabe 3 und eine Felge 4 auf. Die Radscheibe 2 ist gegenüber der mittleren Radebene in axialer Richtung zu der Radaußenseite, also der Seite des Rades 1, die bei an einem Fahrzeug angebrachtem Rad von dem Fahrzeug abgewandt ist, hin versetzt angeordnet. Die Außenseite der Radscheibe 2 verläuft etwa bündig zu dem radaußenseitigen Felgenrand. Durch den gegenseitigen Versatz von Radscheibe 2 und Felge 4 erhält das Rad 1 eine schüssel- oder topfartige Gestaltung. Der durch den Versatz gegebene, zu der Radinnenseite hin offene Raum dient der Aufnahme einer Bremse, die üblicherweise als Scheibenbremse ausgebildet ist.

Bei dem Ausführungsbeispiel nach Fig. 1 und 2 umgreift demgemäß die Felge 4 bei an einem Fahrzeug angebrachtem Rad mit ihrem radinnenseitigen Bereich z.B. eine mit dem Rad 1 um die Radachse 11 drehbare Bremsscheibe 5 einer nicht weiter dargestellten Teilscheibenbremse. Zwischen dem Rand der Bremsscheibe 5 und der Felge 4 ist ein radialer Luftspalt 6 vorhanden. Auf der fahrzeugseitigen Seite der Bremsscheibe 5 ist als Schutzverkleidung für die Bremse ein Bremsenschutzblech 7 angeordnet. Zwischen diesem und der Felge 4 ist ein verhältnismäßig schmaler Luftspalt 8 vorhanden.

Die Radscheibe 2 weist in ihrem radial äußeren, der Felge 4 benachbarten Bereich einen die Radscheibe quer zu der Radebene durchsetzenden, konzentrisch zu der Nabe 3 und der Felge 4 angeordneten Luftaustrittsringkanal 9 auf. In diesem ist ein Schaufelkranz aus Schaufeln 10 angeordnet, die zu der Radachse 11 derart schräg angeordnet sind, daß bei einem Drehen des Rades 1 um die Radachse 11 in Richtung des Pfeiles 12 eine von der Radinnenseite zu der Radaußenseite gerichtete Luftströmung erzeugt wird. Die Schaufeln 10 dienen nicht nur dem Erzeugen einer Luftströmung, sie wirken vielmehr gleichzeitig als Abstützung zwischen den radial inneren Teilen der Radscheibe 2 und der Felge 4. Der Querschnitt des Luftaustrittsringkanals 9 weist einen gegenüber der Radachse 11 geneigten Verlauf auf. Die Neigung ist derart, daß der Ringdurchmesser des Luftaustrittsringkanals 9 von dem radinnenseitigen Kanalende zu der Radaußenseite hin, also in Strömungsrichtung, bis auf durch die Felgenform bedingte Abweichungen stetig größer wird. Das Volumen des Luftaustrittsringkanals 9 bleibt über seine Länge hinweg weitgehend unverändert. Der Luftaustrittsringkanal 9 wirkt demnach weder als Düse noch als Diffusor.

Mit radialem Abstand von dem Luftaustrittsringkanal 9 ist ein die Radscheibe 2 quer zu der Radebene durchsetzender, konzentrisch zu der Nabe 3 und der Felge 4 angeordneter Lufteintrittsringkanal 13 vorgesehen, dessen Ringdurchmesser kleiner als der des Luftaustrittsringkanals 9 ist. Der Lufteintrittsringkanal 13 ist gegenüber dem Luftaustrittsringkanal 9 in axialer Richtung nicht versetzt, sondern — quer zu der Radachse 11 gesehen — mit diesem fluchtend angeordnet. In dem Lufteintrittsringkanal 13 ist ein von Schaufeln 14 gebildeter weiterer Schaufelkranz angeordnet. Die Schaufeln 14 weisen zu der Radachse 11 eine derartige Schrägstellung auf, daß beim Drehen des Rades 1 um die Radachse 11 in Richtung des Pfeiles 12 eine von der Radaußenseite zu der Radinnenseite gerichtete Luftströmung erzeugt wird. Auch die Schaufeln 14 dienen sowohl dem Erzeugen einer Luftströmung als auch als Abstützung für die radial weiter außen und weiter innen liegenden Teile der Radscheibe 2. Auch der Lufteintrittsringkanal 13 weist einen gegenüber der Radachse 11 geneigten Verlauf an. Die Neigung ist jedoch derjenigen des Luftaustrittsringkanals 9 entgegengesetzt. Der Ringdurchmesser des Lufteintrittsringkanals 13 nimmt demgemäß von der Radaußenseite zu dem radinnenseitigen Ende des Lufteintrittsringkanals 13 hin, also ebenfalls in Strömungsrichtung, zu, und zwar stetig. Das Volumen des Lufteintrittsringkanals 13 bleibt über seine Länge hinweg weitgehend unverändert. Der Lufteintrittsringkanal 13 wirkt demnach ebenfalls weder als Düse noch als Diffusor. Die Mündung des Lufteintrittsringkanals 13 ist auf einen Bereich der Bremsscheibe 5 gerichtet, der einigen radialen Abstand von dem Bremsscheibenrand aufweist.

Zwischen dem Luftaustrittsringkanal 9 und dem Lufteintrittsringkanal 13 ist eine Kanaltrennwand 15 vorhanden, die im axialen Querschnitt die Gestalt eines gleichschenkligen Trapezes aufweist, dessen Grundlinien von der radaußen- bzw. radinnenseitigen Seite der Radscheibe 2 und dessen Schenkel von den einander zugewandten Seiten des Luftaustrittsringkanals 9 und des Lufteintrittsringkanals 13 gebildet sind.

An den beiden Fahrzeugseiten sind Räder in spiegelbildlicher Anordnung anzuordnen.

Bei Vorwärtsfahrt eines mit erfindungsgemäßen Rädern ausgestatteten Fahrzeugs wird durch die Schaufeln 10 in dem Luftaustrittsringkanal 9 Luft aus dem Raum unter dem Fahrzeug und aus dem das Rad 1 aufnehmenden Radhaus durch den Luftspalt 8 und durch den Luftspalt 6 quer durch das Rad 1 hindurch zur Radaußenseite gefördert. Dabei wird die Bremsscheibe 5 durch die an ihr vorbeistreichende Luft gekühlt. Wegen der nur geringen Spaltöffnungen ist die Kühlluftmenge, die an der Radinnenseite in das Rad 1 einströmt, und damit die durch diese Kühlluft bewirkte Kühlung der Bremse begrenzt. Eine erhebliche Kühlung ergibt sich jedoch durch die Luft, die durch die Schaufeln 14 durch den Lufteintrittsringkanal 13 von der Radaußenseite auf die Bremsscheibe 5 zu gefördert wird. Diese in einem radial inneren Bereich zumindest annähernd in axialer Richtung auf die Bremsscheibe 5 treffende Kühlluft streicht an der Bremsscheibe 5 entlang nach außen und wird nach Umlenkung gemeinsam mit der von der Radinnenseite kommenden Luft durch den Luftaustrittsringkanal 9 etwa in axialer Richtung zurück zu der Radaußenseite gefördert. Die Luftströmung wird durch die eingezeichneten Strömungspfeile verdeutlicht. Mit der Erfindung wird somit trotz der weitgehenden Kapselung der Bremse eine ausreichende Belüftung und damit Kühlung dieser Bremse erreicht. Darüber hinaus ergibt sich eine intensive Kühlung sowohl der Radscheibe 2 als auch der Felge 4.

Die Anzahl der Schaufeln in den beiden Schaufelkränzen und die jeweilige Winkelstellung richten sich nach den jeweiligen Einsatzbedingungen. Die Schaufeln können so wie in der Zeichnung dargestellt eben ausgebildet sein. Vorteilhaft ist es jedoch, die Schaufeln in sich gekrümmt auszubilden. Ferner können die Schaufeln ein Flügelprofil aufweisen.

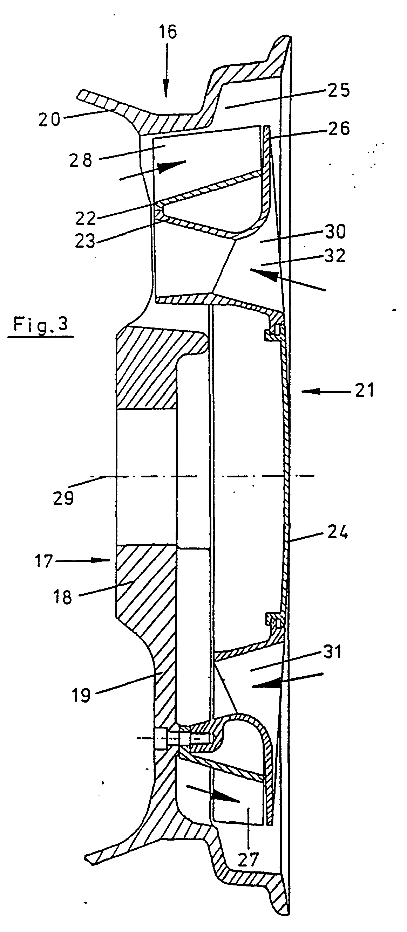

Bei dem Ausführungsbeispiel nach Fig. 3 ist ein Rad 16, das ebenfalls bei Hochgeschwindigkeitspersonenkraftwagen, insbesondere Wettbewerbsfahrzeugen, eingesetzt werden kann, als Speichenrad ausgebildet. Es weist eine Radscheibe 17 mit einer Nabe 18 und über den Umfang verteilt angeordneten Speichen 19 sowie eine Felge 20 auf, die durch die Speichen 19 mit der Nabe 18 verbunden ist. Die Radscheibe 17 und die Felge 20 sind gemeinsam einstückig ausgebildet. Sie bestehen z.B. aus einer Leichtmetallegierung. Die Radscheibe 17 ist gegenüber der mittleren Radebene in axialer Richtung zu der Radaußenseite, also der Seite des Rades 16, die bei an einem Fahrzeug angebrachtem Rad von dem Fahrzeug abgewandt ist, hin versetzt angeordnet. Durch den gegenseitigen Versatz von Radscheibe 17 und Felge 20 erhält das Rad 16 eine schüssel- oder topfartige Gestaltung. Der durch den Versatz gegebene, zu der Radinnenseite hin offene Raum dient der Aufnahme einer Bremse, die üblicherweise als Scheibenbremse ausgebildet ist.

Die Radscheibe 17 ist nur so weit gegenüber der mittleren Radebene in axialer Richtung zu der Radaußenseite hin versetzt angeordnet, daß die Felge 20 mit ihrem radaußenseitigen Bereich in axialer Richtung über die Radscheibe 17 hinausragt und demgemäß das Rad 16 auch auf der Radaußenseite eine schüssel- oder topfartige Gestaltung aufweist, deren axiale Erstreckung jedoch verhältnismäßig gering ist. In den auf diese Weise gebildeten, zu der Radaußenseite hin offenen Raum ist eine Radblende 21 mit etwa kugelkappenförmiger Außenseite eingesetzt. Die Mitte der Außenseite der Radblende 21 ist etwa bündig zu dem radaußenseitigen Felgenrand angeordnet. Die Radblende 21 nimmt im wesentlichen den auf der Außenseite der Radscheibe 17 von der Felge 20 umschlossenen Raum ein und erstreckt sich mit axialen Fortsätzen in die Räume zwischen den Speichen 19. Sie weist einen Blendenaußenring 22, einen Blendeninnenring 23 und eine mittlere Abdeckkappe 24 auf. Der Blendenaußenring 22 und der Blendeninnenring 23 sind durch nicht dargestellte Schrauben an den Speichen 19 befestigt. Die Abdeckkappe 24 ist an dem Blendeninnenring 23 befestigt.

Der Blendenaußenring 22 bildet die radinnenseitige Innenwand eines konzentrisch zu der Nabe 18 und der Felge 20 angeordneten Luftaustrittsringkanals 25, dessen radaußenseitige Innenwand von dem äußeren Randbereich 26 des Blendeninnenrings 23 und dessen Außenwand von der Felge 20 gebildet ist. Der Blendenaußenring 22 trägt in den Bereichen der Speichen 19 Schaufeln 27 mit verhältnismäßig geringer axialer Erstreckung und in den Bereichen zwischen den Speichen 19 Schaufeln 28 mit größerer axialer Erstreckung, die mit ihren radinnenseitigen Bereichen in die Räume zwischen den Speichen 19 hineinragen. Sowohl die Schaufeln 27 als auch die Schaufeln 28 erstrecken sich in radialer Richtung, weisen aber gegenüber der Radachse 29 eine Schrägstellung auf. Diese Schrägstellung dient dazu, bei einem Drehen des Rades 16 um die Radachse 29 eine von der Radinnenseite zu der Radaußenseite gerichtete Luftströmung zu erzeugen. Die Schrägstellung kann beispielsweise 30° betragen.

Der Blendeninnenring 23 weist mit radialem Abstand von dem Luftaustrittsringkanal 25 einen ihn axial durchsetzenden, konzentrisch zu der Felge 20 angeordneten Lufteintrittsringkanal 30 auf, dessen Ringdurchmesser kleiner als der des Luftaustrittsringkanals 25 ist. In dem Lufteintrittsringkanal 30 ist ein Schaufelkranz aus Schaufeln 31 und Schaufeln 32 angeordnet. Die Schaufeln 31 befinden sich in den Bereichen, die den Speichen 19 gegenüberliegen und weisen demgemäß eine verhältnismäßig geringe Erstreckung in axialer Richtung auf, während die Schaufeln 32 in den Bereichen zwischen den Speichen 19 angeordnet sind, eine größere Erstreckung in axialer Richtung aufweisen und mit ihren radinnenseitigen Bereichen in die Räume zwischen den Speichen 19 hineinragen. Sowohl die Schaufeln 31 als auch die Schaufeln 32 erstrecken sich in radialer Richtung. Sie weisen sämtlich radaußenseitige Bereiche auf, die eine Schrägstellung gegenüber der Radachse 29 aufweisen. Die Schrägstellung der radäußeren Bereiche der Schaufeln 31, 32 ist der Schrägstellung der Schaufeln 28 des Schaufelkranzes des Luftaustrittsringkanals 25 entgegengesetzt und kann ebenfalls z.B. 30° betragen. Die radinneren Bereiche der Schaufeln 31, 32 erstrekken sich in Richtung der Radachse 29. Die Knickstelle zwischen den radäußeren- und radinneren Bereichen der Schaufeln 31, 32 sind derart angeordnet, daß die schräg angeordneten radäußeren Bereiche sowohl der Schaufeln 31 als auch der Schaufeln 32 gleiche Erstreckung in axialer Richtung aufweisen. Dementsprechend sind die axial ausgerichteten radinneren Bereiche der Schaufeln 31 in axialer Richtung verhältnismäßig kurz und die axial ausgerichteten radinneren Bereiche der Schaufeln 32 in axialer Richtung länger ausgebildet.

Die Wirkungsweise des Rades 16 nach Fig. 3 ist derjenigen des Rades 1 nach Fig. 1, 2 ähnlich. Bei Vorwärtsfahrt eines mit erfindungsgemäßen Rädern ausgestatteten Fahrzeugs, das auf den beiden Fahrzeugseiten Räder in spiegelbildlicher Anordnung aufweist, wird durch die Schaufeln 27, 28 in dem Luftaustrittsringkanal 25 Luft aus dem Raum unter dem Fahrzeug und aus dem das Rad aufnehmenden Radhaus quer durch das Rad durch die Räume zwischen den Speichen 19 hindurch zur Radaußenseite gefördert. Dabei werden die an der Innenseite der Radscheibe 17 angeordnete Bremse sowie die Radscheibe 17 und die Felge 20 durch die an ihnen vorbeistreichende Luft gekühlt. Eine weitere erhebliche Kühlung ergibt sich durch die Luft, die durch die Schaufeln 31, 32 durch den Lufteintrittsringkanal 30 von der Radaußenseite zumindest annähernd in axialer Richtung durch das Rad durch die Räume zwischen den Speichen 19 hindurch auf die Bremse zu gefördert wird und durch den Luftaustrittsringkanal 25 zu der Radaußenseite zurückströmt. Die Luftströmung wird durch die eingezeichneten Strömungspfeile verdeutlicht.

Ebenso wie bei dem Ausführungsbeispiel nach Fig. 1, 2 richtet sich bei dem Ausführungsbeispiel nach Fig. 3 die Anzahl der Schaufeln in den beiden Schaufelkränzen und die jeweilige Winkelstellung nach den jeweiligen Einsatzbedingungen. Statt der in der Zeichnung dargestellten ebenen Schaufeln für den Luftaustrittsringkanal und der jeweiligen radaußen- bzw. radinnenseitigen ebenen, jeweils an einer Knickstelle aneinandergrenzenden Schaufelbereiche der Schaufeln für den Lufteintrittsringkanal können in sich gekrümmte Schaufeln eingesetzt werden. Ferner können die Schaufeln ein Flügelprofil aufweisen.

Bezugszeichenliste
1 Rad
2 Radscheibe
3 Nabe
4 Felge
5 Bremsscheibe
6 Luftspalt
7 Bremsenschutzblech
8 Luftspalt
9 Luftaustrittsringkanal
10 Schaufel
11 Radachse
12 Pfeil (Drehrichtung)
13 Lufteintrittsringkanal
14 Schaufel
15 Kanaltrennwand
16 Rad
17 Radscheibe
18 Nabe
19 Speiche
20 Felge
21 Radblende
22 Blendenaußenring
23 Blendeninnenring

24 Abdeckkappe
25 Luftaustrittsringkanal
26 äußerer Randbereich
27 Schaufel
28 Schaufel
29 Radachse
30 Lufteintrittsringkanal
31 Schaufel
32 Schaufel

**Patentansprüche**

1. Rad für Kraftfahrzeuge, insbesondere Personenkraftwagen, mit einer Felge (4, 20), einer mit dieser verbundenen Radscheibe (2, 17), Luftaustrittsöffnungen, die in der Radscheibe konzentrisch zu der Felge in dem felgennahen Bereich über den Umfang verteilt für eine von der Radinnenseite zu der Radaußenseite gerichtete Luftströmung vorgesehen sind, Lufteintrittsöffnungen, die in der Radscheibe konzentrisch zu der Felge radial achsnäher als die Luftaustrittsöffnungen über den Umfang verteilt für eine von der Radaußenseite zu der Radinnenseite gerichtete Luftströmung angeordnet sind, und je einem den Lufteintrittsöffnungen und den Luftaustrittsöffnungen zugeordneten Schaufelkranz, dadurch gekennzeichnet, daß zumindest Teile der Schaufeln (10, 14, 27, 28, 31, 32) der beiden Schaufelkränze zu der Radachse (11, 29) Schrägstellungen aufweisen und die Schrägstellungen der Schaufeln (10, 14, 27, 28, 31, 32) der beiden Schaufelkränze gegensinnig gerichtet sind.

2. Rad nach Anspruch 1, dadurch gekennzeichnet, daß ein den Schaufelkranz, der den Lufteintrittsöffnungen zugeordnet ist, aufnehmender Lufteintrittsringkanal (13, 30) und ein den Schaufelkranz, der den Luftaustrittsöffnungen zugeordnet ist, aufnehmender Luftaustrittsringkanal (9, 25) vorgesehen sind.

3. Rad nach Anspruch 2, dadurch gekennzeichnet, daß der Lufteintrittsringkanal (13, 30) und der Luftaustrittsringkanal (9, 25) quer zu der Richtung der Radachse (11, 29) gesehen zumindest annähernd zueinander fluchtend angeordnet sind.

4. Rad nach Anspruch 2 oder 3, dadurch gekennzeichnet, daß der Lufteintrittsringkanal (13, 30) an seinem Ausströmende einen größeren Ringdurchmesser als an seinem Einströmende aufweist.

5. Rad nach Anspruch 4, dadurch gekennzeichnet, daß die Größe des Ringdurchmessers des Lufteintrittsringkanals (13, 30) in Strömungsrichtung wenigstens annähernd stetig zunimmt.

6. Rad nach einem der Ansprüche 2 bis 5, dadurch gekennzeichnet, daß der Luftaustrittsringkanal (9, 25) an seinem Ausströmende einen größeren Ringdurchmesser als an seinem Einströmende aufweist.

7. Rad nach Anspruch 6, dadurch gekennzeichnet, daß die Größe des Ringdurchmessers des Luftaustrittsringkanals (9, 25) in Strömungsrichtung wenigstens annähernd stetig zunimmt.

8. Rad nach Anspruch 7, dadurch gekennzeichnet, daß die Zunahme der Größe des Ringdurchmessers des Luftaustrittsringkanals (9, 25) der der Größe des Ringdurchmessers des Lufteintrittsringkanals (13, 30) zumindest annähernd gleich ist.

9. Rad nach einem der Ansprüche 2 bis 8, dadurch gekennzeichnet, daß wenigstens entweder der Lufteintrittsringkanal (13) oder der Luftaustrittsringkanal (9) in der Radscheibe (2) eingeformt ist.

10. Rad nach einem der Ansprüche 2 bis 8, dadurch gekennzeichnet, daß der Lufteintrittsringkanal (30) und der Luftaustrittsringkanal (25) in einem an der Radscheibe (17) befestigbaren Einsatzteil eingeformt sind.

11. Rad nach Anspruch 10, dadurch gekennzeichnet, daß das Einsatzteil als Radblende (21) ausgebildet ist.

12. Rad nach Anspruch 11, dadurch gekennzeichnet, daß die Radblende (21) einen Blendenaußenring (22), der die radial innere Begrenzung des Luftaustrittsringkanals (25) bildet, und einen Blendeninnenring (23) mit eingeformtem Lufteintrittsringkanal (30) aufweist.

13. Rad nach Anspruch 12, dadurch gekennzeichnet, daß die in dem Luftaustrittsringkanal (25) angeordneten Schaufeln (28) an dem Blendenaußenring (22) befestigt sind.

**Revendications**

1. Roue pour véhicules à moteur, surtout pour voitures particulières, comprenant une jante (4, 20) un disque de roue (2) relié à celle-ci, des ouvertures de sortie d'air prévues dans le disque de roue, concentriques avec la jante, réparties sur la surface dans la zone proche de la jante et assurant un courant d'air dirigé depuis le côté intérieur de la roue vers le côté extérieur de la roue, des ouvertures d'entrée d'air disposées dans le disque de roue, concentriques avec la jante, réparties sur la surface, radialement plus proches de l'axe que les ouvertures de sortie d'air et assurant un courant d'air dirigé depuis le côté extérieur de la roue vers le côté intérieur de la roue, et une couronne d'ailettes associée respectivement aux ouvertures d'entrée d'air et aux ouvertures de sortie d'air, caractérisée en ce que, au moins des parties des ailettes (10, 14, 27, 28, 31, 32) des deux couronnes d'ailettes présentent des positions inclinées par rapport à l'axe de roue et les positions inclinées des ailettes (10, 14, 27, 28, 31, 32) des deux couronnes d'ailettes sont dirigées en sens inverse.

2. Roue selon la revendication 1, caractérisée en ce qu'il a été prévu un canal annulaire d'entrée d'air (13, 30) recevant la couronne d'ailettes associée aux ouvertures d'entrée d'air, et un canal annulaire de sortie d'air (9, 25) recevant la couronne d'ailettes associée aux ouvertures de sorties d'air.

3. Roue selon la revendication 2, caractérisée en ce que le canal annulaire d'entrée d'air (13, 30) et le canal annulaire de sortie d'air (9, 25) sont placés au moins approximativement en alignement l'un par rapport à l'autre, perpendiculairement à la direction de l'axe de roue (11, 29).

4. Roue selon l'une des revendications 2 ou 3, caractérisée en ce que le canal annulaire d'entrée d'air (13, 30) comporte à son évacuation de l'écoulement un diamètre annulaire plus grand qu'à son entrée.

5. Roue selon la revendication 4, caractérisée en ce que la grandeur du diamètre annulaire du canal annulaire d'entrée d'air (13, 30) augmente dans le sens de l'écoulement de façon au moins approximativement régulière.

6. Roue selon la revendication 4, caractérisée en ce que le canal annulaire de sortie d'air (9, 25) comporte à son évacuation de l'écoulement un diamètre annulaire plus grand qu'à son entrée.

7. Roue selon la revendication 6, caractérisée en ce que la grandeur du diamètre annulaire du canal annulaire de sortie de l'écoulement (9, 25) augmente dans le sens du courant de façon au moins approximativement régulière.

8. Roue selon la revendication 7, caractérisée en ce que l'accroissement de grandeur du diamètre annulaire du canal annulaire de sortie d'air (9, 25) est au moins approximativement égal à celui du diamètre annulaire du canal annulaire d'entrée d'air (13, 30).

9. Roue selon l'une des revendications 2 à 8, caractérisée en ce qu'au moins ou bien le canal annulaire d'entrée d'air (13) ou bien le canal annulaire de sortie d'air (9) est moulé dans le disque de roue (2).

10. Roue selon l'une des revendications 2 à 8, caractérisée en ce que le canal annulaire d'entrée d'air (30) et le canal annulaire de sorte d'air (25) sont moulés dans une garniture pouvant être fixée sur le disque de roue (17).

11. Roue selon la revendication 10, caractérisée en ce que la garniture est réalisée comme cache-roue (21).

12. Roue selon la revendication 11, caractérisée en ce que le cache-roue (21) comporte un anneau extérieur de cache (22) qui constitue la limitation radicale intérieure du canal de sortie d'air (25) et un anneau intérieur de cache (23) avec le canal annulaire d'entrée d'air (30) moulé.

13. Roue selon la revendication 12, caractérisée en ce que les ailettes (28) placées dans le canal annulaire de sortie d'air (25) sont fixées sur l'anneau extérieur de cache (22).

**Claims**

1. A wheel for motor vehicles, more particularly passenger cars, comprising a rim (4, 20), a centre web (2) connected thereto, air outlet openings peripherally distributed in the centre web concentrically with and in the region near to the rim and providing a flow of air from the inside to the outside of the wheel, air inlet openings peripherally distributed in the centre web concentrically with the rim and radially nearer the axle than the air outlet openings and providing an air flow from the outside to the inside of the wheel, and a ring of blades associated with the air inlet openings and another ring of blades associated with the air outlet openings, characterised in that at least parts of the blades (10, 14, 27, 28, 31, 32) in the two rings are disposed obliquely relative to the axle (11, 29) and the oblique positions of the blades (10, 14, 27, 28, 31, 32) in the two rings point in opposite directions.

2. A wheel according to claim 1, characterised in that an annular air inlet duct (13, 30) receiving the ring of blades associated with the air inlet openings and an annular air outlet duct (9, 25) receiving the ring of blades associated with the air outlet openings are provided.

3. A wheel according to claim 2, characterised in that the annular air outlet duct (13, 30) and the annular air outlet duct (9, 25) are disposed at least approximately in line with one another when considered transversely to the direction of the axle (11, 29).

4. A wheel according to claim 2 or 3, characterised in that the annular air inlet duct (13, 30) has a larger diameter at its outflow end than at its inflow end.

5. A wheel according to claim 4, characterised in that the diameter of the annular air inlet duct (13, 30) increases continuously, at least approximately, in the flow direction.

6. A wheel according to any of claims 2 to 5, characterised in that the annular air outlet duct (9, 25) has a greater diameter at its outflow end than at its inflow end.

7. A wheel according to claim 6, characterised in that the diameter of the annular air outlet duct (9, 25) increases continuously, at least approximately, in the flow direction.

8. A wheel according to claim 7, characterised in that the increase in the diameter of the annular air outlet duct (9, 25) is at least approximately equal to the increase in the diameter of the annular air inlet duct (13, 30).

9. A wheel according to any of claims 2 to 8, characterised in that at least either the annular air inlet duct (13) or the annular air outlet duct (9) are formed in the centre web (2).

10. A wheel according to any of claims 2 to 8, characterised in that the annular air inlet duct (30) and the annular air outlet duct (25) are formed in an inserted part for securing to the centre web (17).

11. A wheel according to claim 10, characterised in that the inserted part is in the form of a wheel cover (21).

12. A wheel according to claim 11, characterised in that the wheel cover (21) has an outer ring (22) which radially inwardly bounds the annular air outlet duct (25), and also has an inner ring (23) with an integrally-formed annular air inlet duct (30).

13. A wheel according to claim 12, characterised in that the blades (28) disposed in the annular air outlet duct (25) are secured to the outer ring (22) of the cover.

Fig. 1

Fig. 2

Fig.3